# EUROPÄISCHE PATENTSCHRIFT

(11) **EP 2 313 473 B1**
(45) Veröffentlichungstag und Bekanntmachung des Hinweises auf die Patenterteilung: **08.02.2012**
(21) Anmeldenummer: 09780837.2
(22) Anmeldetag: 20.07.2009
(51) Int. Cl.: C09K 11/08, C09K 11/77

(54) **ALPHA-SIALON-LEUCHTSTOFF**
ALPHA-SIALON PHOSPHOR
SUBSTANCE LUMINESCENTE ALPHA-SIALON

(30) Priorität: 18.08.2008 DE 102008038249
(43) Veröffentlichungstag der Anmeldung: 27.04.2011
(73) Patentinhaber: OSRAM AG, 81543 München (DE)
(72) Erfinder: POHL, Bianca, 81379 München (DE); JERMANN, Frank, 86343 Königsbrunn (DE)
(86) Internationale Anmeldenummer: PCT/EP2009/059309
(87) Internationale Veröffentlichungsnummer: WO 2010/020495

(56) Entgegenhaltungen:
- EP-A1- 1 887 067
- WO-A1-2004/029177
- WO-A1-2005/103199
- US-A1- 2006 049 414

## Beschreibung

### Technisches Gebiet

Die Erfindung geht aus von einem Leuchtstoff gemäß dem Oberbegriff des Anspruchs 1 aus der Gruppe der alpha-Sialone. Derartige Leuchtstoffe sind insbesondere für die Anwendung bei Lichtquellen, beispielsweise LEDs, gedacht.

### Stand der Technik

Die EP 1 498 466 zeigen alpha-Sialone, die mit Yb dotiert sind. Auch andere Dotierungen sind dort angeführt wie Eu, Dy und Tb. Derartige Leuchtstoffe eigenen sich vor allem für die Anwendung bei warmweißen Lichtquellen.

WO 2004/029177 zeigt einen Leuchtstoff dotiert mit Europium und kodotiert mit Mangan mit der Formel MAl₂₋ₓSiₓO₄₋ₓNₓ, wobei M ein oder mehrere Elemente aus der Gruppe Ca, Sr, Ba ist.

### Darstellung der Erfindung

Die Aufgabe der vorliegenden Erfindung ist es, einen Leuchtstoff auf der Basis von alpha-Sialon anzugeben, der sich auch für höhere Farbtemperaturen einsetzen lässt.

Diese Aufgabe wird gelöst durch die kennzeichnenden Merkmale des Anspruchs 1.

Besonders vorteilhafte Ausgestaltungen finden sich in den abhängigen Ansprüchen.

Der neuartige Leuchtstoff auf der Basis von alpha-Sialon zeichnet sich durch eine Ko-Dotierung aus, die Mn zusätzlich zu bekannten Dotierungen verwendet. Damit wird eine effiziente, durch blaues oder UV-Licht anregbare Lichtquelle ermöglicht. Dieser Leuchtstoff ist temperaturstabil und emittiert breitbandig im gelben Spektralbereich.

Die dominante Wellenlänge λ_{dom} liegt im Bereich von typisch 575 bis 578 nm. Damit können insbesondere farbortstabile kaltweiße bis tageslichtweiße Lichtquellen wie LEDs auf Basis einer Konversions-LED hergestellt werden.

Mit Eu dotierte alpha-Sialone zählen zu den temperaturstabilsten Leuchtstoffen überhaupt. Leider passt bisher dabei die Emissionswellenlänge nicht zu den oben erläuterten Anforderungen. Insbesondere lassen sich damit bisher keine weißen LEDs mit den oben erläuterten Anforderungen herstellen.

Die bisher bekannten alpha-Sialone haben die allgemeine Summenformel M1xM2y(Si,Al)12(O,N)16. M1 ist dabei allgemein ein oder mehrere Elemente aus der Gruppe Li, Mg, Ca, Y und die Lanthanoide mit Ausnahme von Ce und La. M2 ist ein oder mehrere Elemente aus der Gruppe Ce, Pr, Eu, Tb, Yb und Er, die als Aktivator wirken. Dabei gilt 0,3 ≤ x+y ≤ 1,5 sowie 0 < y < 0,7. Derartige alpha-Sialone sind jedoch aufgrund ihrer optischen Eigenschaften nur für wenige Anwendungsgebiete geeignet. Während beispielsweise das Yb-dotierte Ca-alpha-Sialon (M2=Yb) mit im Vergleich geringen Quantenausbeuten zu kurzwellig im grünen Spektralbereich emittiert, ist die Eu-dotierte Variante (M2=Eu) mit ihrer Emission zu sehr in den langwelligen orangeroten Spektralbereich verschoben.

Konkurrierende Leuchtstoff-Systeme wie die Orthosilikate zeigen große Schwächen bei der Stabilität der Emission, beispielsweise ein hohes Temperatur-Quenching bei einer Temperatur von mehr als 100 °C, wie sie in vielen Anwendungen zu erwarten ist. Außerdem ist die Emission sehr schmalbandig und damit für viele Beleuchtungszwecke ungeeignet. Das schmalbandig emittierende (Sr,Ba)Si2O2N2:Eu ist zwar sehr temperaturstabil, zeigt aber ansonsten ähnliche Emissionseigenschaften wie das gelbe Orthosilikat.

Erfindungsgemäß wird jetzt ein alpha-Sialon vorgeschlagen mit einer allgemeine Bruttoformel M1_{p/2}Si_{12-p-q}Al_{p+q}O_{q}N_{16-q}:D. Dabei ist M1 wie oben vorgeschlagen, also ein oder mehrere Elemente aus der Gruppe Li, Mg, Ca, Y und die Lanthanoide mit Ausnahme von Ce und La. Die Dotierung ist aber jetzt eine Kodotierung aus den bekannten Aktivatoren M2 wie oben. M2 ist ein oder mehrere Elemente aus der Gruppe Ce, Pr, Eu, Tb, Yb und Er. Dabei ist D eine Kodotierung aus einem oder zwei der bekannten Aktivatoren, jedoch zusammen mit einer Dotierung an Mn. Formal lässt sich dies durch D = (M2,Mn) ausdrücken. Schließlich ist dabei q = 0 bis 2,5 und p = 0,5 bis 4 gewählt.

Bevorzugt ist dabei M2 entweder Eu oder Yb oder beide in Mischung. Dabei ist der atomare Anteil von Mn an D immer kleiner als der von M2. der Anteil von Mn an D liegt bevorzugt im Bereich 1 bis 50% von M2.

Das Herstellverfahren zur Herstellung eines alpha-Sialon-Leuchtstoffs mit Mn-Kodotierung läuft im Prinzip ähnlich ab wie in der Literatur für bekannte alpha-Sialon-Leuchtstoffe beschrieben.

### Kurze Beschreibung der Zeichnungen

Im Folgenden soll die Erfindung anhand mehrerer Ausführungsbeispiele näher erläutert werden. Die Figuren zeigen:
- Figur 1: die Wellenlängenverschiebung je nach Dotierung bei einem Ca-alpha-Sialon;
- Figur 2: ein Farbort-Diagramm für eine blaue LED und verschiedenen Sialonen;
- Figur 3: die Quanteneffizienz QE verscheiden dotierter Sialone;
- Figur 4: ein Halbleiterbauelement, das als Lichtquelle (LED) für weißes Licht dient;
- Figur 5: eine Beleuchtungseinheit mit Leuchtstoffen gemäß der vorliegenden Erfindung.

### Bevorzugte Ausführungsform der Erfindung

Die Herstellung eines Ca-alpha-Sialons mit Yb-Kodotierung zu Eu gelingt auf folgende Weise:
Die Ausgangssubstanzen CaCO3, Si3N4, AlN, Eu2O3 und Yb2O3 werden stöchiometrisch eingewogen und für mehrere Stunden homogenisiert. Anschließend wird die Eduktmischung für mehrere Stunden (2 bis 7 Std) unter reduzierender Atmosphäre im Rohrofen geglüht. Die Temperatur wird zwischen 1500 und 2000 °C gewählt. Darauf kann eine zweite Glühung erfolgen. Sie findet ebenfalls unter reduzierender Atmosphäre zwischen 1200 und 2000 °C statt.

Die Herstellung eines Ca-alpha-Sialons mit Dreifachdotierung Eu, Yb, Mn gelingt auf folgende Weise:
Die Ausgangssubstanzen CaCO3, Si3N4, AlN, Eu2O3 und Yb2O3 und Mn2O3 werden stöchiometrisch eingewogen und für mehrere Stunden homogenisiert. Anschließend wird die Eduktmischung für mehrere Stunden (2 bis 7 Std) unter reduzierender Atmosphäre im Rohrofen geglüht. Die Temperatur wird zwischen 1500 und 2000 °C gewählt. Darauf kann eine zweite Glühung erfolgen. Sie findet ebenfalls unter reduzierender Atmosphäre zwischen 1200 und 2000 °C statt.

Je nach Aktivatorkonzentration und relativem Verhältnis zwischen den einzelnen Kodotierungen lässt die Wellenlänge des Sialons je nach gewünschter Anwendung in geeigneter Weise verschieben. Beispiele für Farborte sind in Tab. 1 angegeben.

| Muster | Eu in Mol.-% | Yb in Mol.-% | Ce in Mol.-% | Mn in Mol.-% | x | y | λ_{Schw} (nm) | λ_{dom} (nm) |
|---|---|---|---|---|---|---|---|---|
| 152/08 | - | 0,5 | | | 0,386 | 0,568 | 563,1 | 562,9 |
| 158/08 | 2 | - | | | 0,486 | 0,495 | 588,3 | 577,3 |
| 159/08 | 4 | - | | | 0,497 | 0,489 | 591,1 | 578,7 |
| 161/08 | 4 | 0,5 | | | 0,490 | 0,494 | 589,3 | 577,7 |
| 162/08 | 4 | 1 | | | 0,482 | 0,499 | 587,8 | 576,7 |
| 163/08 | 2 | 1 | | 0,05 | 0,458 | 0,518 | 581,2 | 573,3 |
| 164/08 | - | 1 | | | 0,387 | 0,568 | 564,2 | 563,1 |

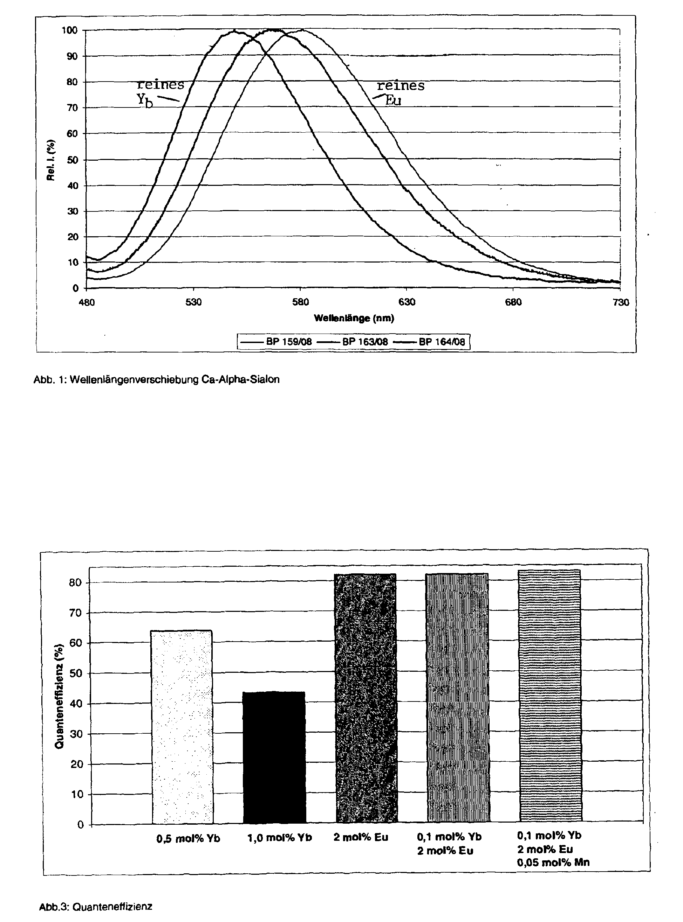

Figur 1 zeigt die Wellenlängenverschiebung bei Ca-alpha-Sialon für reine Eu-Dotierung, für reine Yb-Dotierung und für eine Yb,Eu-Kodotierung.

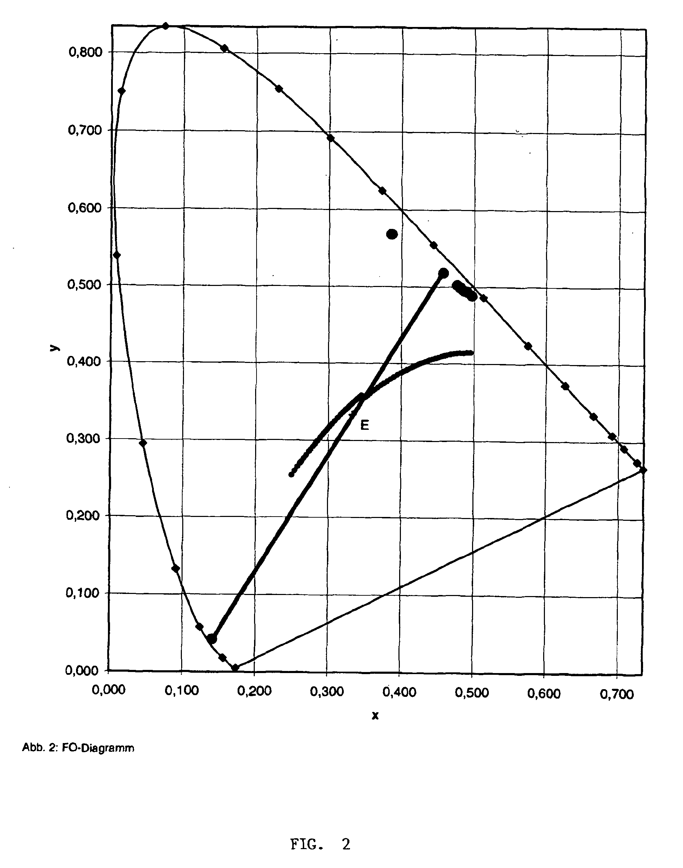

Figur 2 zeigt ein Farbort-Diagram für die Leuchtstoffe aus Tab. 1. Es wird deutlich, dass Sialone erzielt werden können, die zusammen mit einer blauen LED eine Gerade aufspannen, die mehr oder weniger zielgenau durch den Weißpunkt E läuft.

**Tab. 2 zeigt die optischen Eigenschaften verschiedener Leuchtstoffe bei zweifacher und dreifacher Kodotierung. Die Anregung erfolgte bei 460 nm. Es zeigt sich, dass die Kodotierung mit Mn in einer Konzentration von 0,05 bis 0,3 Mol.-% von M1 gewählt werden sollte.**

| Muster | Eu in Mol.-% | Yb in Mol.-% | Ce in Mol.-% | Mn in Mol.-% | x | y | λ_{dom} (nm) | Q.E. (%) | Rel. Hell. (%) |
|---|---|---|---|---|---|---|---|---|---|
| 152/08 | - | 0,5 | | | 0,386 | 0,568 | 562, 9 | 63,8 | 100 |
| 158/08 | 2 | - | | | 0,486 | 0,495 | 577,3 | 82,2 | 210 |
| 159/08 | 4 | - | | | 0,497 | 0,489 | 578,7 | 82,7 | 280 |
| 164/08 | - | 1 | | | 0,387 | 0,568 | 563,1 | 43,3 | 102 |
| 165/08 | 2 | 0,1 | | | 0,481 | 0,500 | 576,6 | 82,1 | 217 |
| 176/08 | 2 | 0,1 | 0,1 | | 0,480 | 0,500 | 576,5 | 80,9 | 209 |
| 185/08 | 2 | 0,1 | | 0,05 | 0,481 | 0,499 | 576,6 | 83,2 | 218 |
| 164/08 | 2 | 0, 1 | | 0,1 | 0,477 | 0,502 | 576,1 | 80, 0 | 210 |

Ohne Eu ist die Quanteneffizienz Q.E. und die relative Helligkeit relativ schlecht. Das liegt daran, dass ohne Eu die Absorption des neuen Leuchtstoffs relativ schlecht ist.

Figur 3 zeigt die Quanteneffizienz Q.E. in Prozent für ausgewählte Leuchtstoffe. Die Dotierung ist jeweils angegeben. Eine dreifache Dotierung aus Eu, Yb, und Mn zeigt die höchste Q.E.

Insgesamt zeigt sich damit, dass die für viele Anwendungen ungünstige Emissionswellenlänge des ansonsten effizienten und stabilen alpha-Sialons, insbesondere Ca-Sialons, durch geeignete Eu, Mn-Kodotierung passend eingestellt werden kann. Eine Eu-Dotierung allein ist zu langwellig, Yb allein zu kurzwellig. Die Kodotierung mit Eu und Yb ist nicht besonders gut geeignet, da die Lumineszenz nur schwach ausgeprägt ist. Erstaunlicherweise reichen aber geringe Anteil Mn im Bereich 0,05 bis 0,3 Mol.-% um die Absorption und damit die Konversionseffizienz zu verbessern. Es zeigt sich, dass Mn in kleinsten Mengen eine zusätzliche kurzwellige Verschiebung erzielt. Somit ist es leichter möglich, in der gewünschten Lichtfarbe zu emittieren. Die Farbtemperatur ist mindestens 4200 K. Sie kann je nach Zumischung auch 6500 K und mehr erreichen.

Beim Einsatz derartiger Leuchtstoffe in einer weißen LED zusammen mit einer InGaN-LED wird ein Aufbau ähnlich wie in WO 97/50132 beschrieben verwendet. Beispielweise wird ein Leuchtstoff nach obigen Ausführungsbeispielen Epoxidharz dispergiert und mit dieser Harzmischung eine LED mit einem Emissionsmaximum von etwa 450 nm (blau) umhüllt. Die Mischung der blauen LED-Strahlung mit der gelben Leuchtstoff-Emission ergibt in diesem Fall einen Farbort von typisch x = 0,359 / y = 0,350, entsprechend weißem Licht der Farbtemperatur 4500 K.

Die oben beschriebenen Leuchtstoffe weisen im allgemeinen gelbe Körperfarbe auf. Sie emittieren im gelben Spektralbereich. Bei Zugabe oder alleiniger Verwendung von Ga statt Al verschiebt sich die Emission mehr in Richtung grün, so dass sich insbesondere auch höhere Farbtemperaturen realisieren lassen.

Derartige Leuchtstoffe lassen sich für Konversions-LED auf Basis BY, also blauer LED und gelb konvertierendem Leuchtstoff, der einen Teil der blauen Strahlung konvertiert, verwenden. Ein derartiger Leuchtstoff lässt sich jedoch auch für RGB-Konversion anwenden. Dabei kann die LED, die primäre Strahlung aussendet, im UV emittieren oder eine blaue LED sein, wie an sich bekannt. Auch bei noch höherwertigen 4-Farben-Konversions-LED vom Typ BGOR lassen sich die neuartigen Leuchtstoffe gut verwenden.

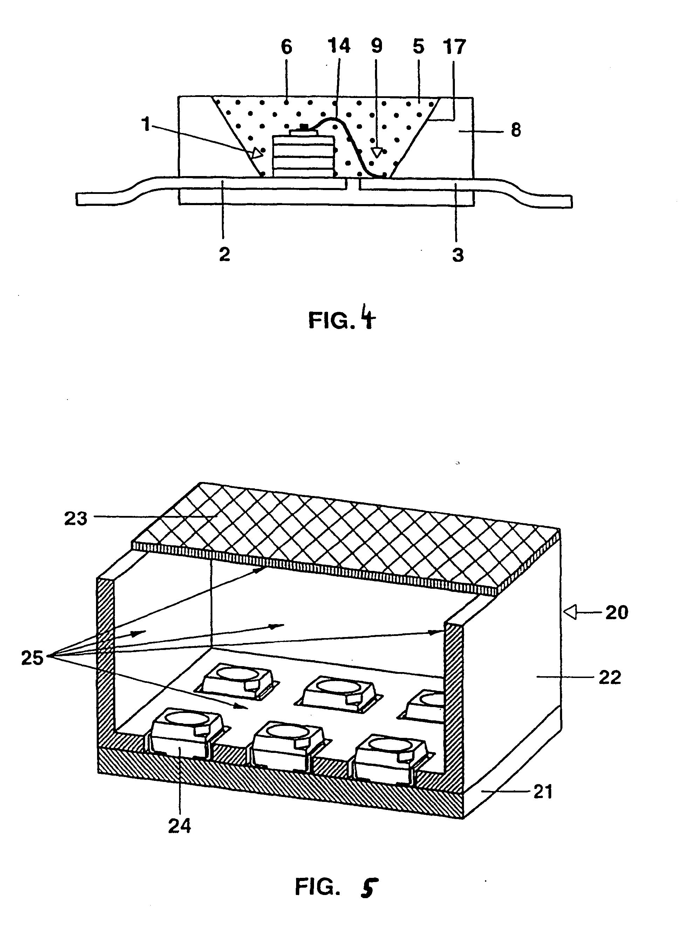

Für den Einsatz in einer weißen LED zusammen mit einem GaInN-Chip wird beispielsweise ein Aufbau ähnlich wie in US 5 998 925 beschrieben verwendet. Der Aufbau einer derartigen Lichtquelle für weißes Licht ist in Figur 4 explizit gezeigt. Die Lichtquelle ist ein Halbleiterbauelement (Chip 1) des Typs InGaN mit einer Peak-Emissionswellenlänge von 460 nm mit einem ersten und zweiten elektrischen Anschluss 2,3, das in ein lichtundurchlässiges Grundgehäuse 8 im Bereich einer Ausnehmung 9 eingebettet ist. Einer der Anschlüsse 3 ist über einen Bonddraht 14 mit dem Chip 1 verbunden. Die Ausnehmung hat eine Wand 17, die als Reflektor für die blaue Primärstrahlung des Chips 1 dient. Die Ausnehmung 9 ist mit einer Vergussmasse 5 gefüllt, die als Hauptbestandteile ein Epoxidgießharz (80 bis 90 Gew.-%) und Leuchtstoffpigmente 6 (weniger als 15 Gew.-%) enthält. Weitere geringe Anteile entfallen u.a. auf Methylether und Aerosil. Die Leuchtstoffpigmente sind alpha-Sialon-Pigmente.

In Figur 5 ist ein Ausschnitt aus einer Flächenleuchte 20 als Beleuchtungseinheit gezeigt. Sie besteht aus einem gemeinsamen Träger 21, auf den ein quaderförmiges äußeres Gehäuse 22 aufgeklebt ist. Seine Oberseite ist mit einer gemeinsamen Abdeckung 23 versehen. Das quaderförmige Gehäuse besitzt Aussparungen, in denen einzelne HalbleiterBauelemente 24 untergebracht sind. Sie sind UVemittierende Leuchtdioden mit einer Peakemission von 360 nm. Die Umwandlung in weißes Licht erfolgt mittels Konversionsschichten, die direkt im Gießharz der einzelnen LED sitzen ähnlich wie in Figur 4 beschrieben oder Schichten 25, die auf allen der UV-Strahlung zugänglichen Flächen angebracht sind. Dazu zählen die innen liegenden Oberflächen der Seitenwände des Gehäuses, der Abdeckung und des Bodenteils. Die Konversionsschichten 25 bestehen aus drei Leuchtstoffen, die im gelben, grünen und blauen Spektralbereich emittieren unter Benutzung der erfindungsgemäßen Leuchtstoffe, die im Gelben emittieren.

## Patentansprüche

1. Leuchtstoff vom Typ alpha-Sialon **gekennzeichnet durch** folgende Merkmale:
a) die Bruttoformel ist M1_{p/2}Si_{12-p-q}Al_{p+q}O_{q}N_{16-q}:D;
b) dabei ist M1 ein oder mehrere Elemente aus der Gruppe Li, Mg, Ca, Y und die Lanthanoide mit Ausnahme von Ce und La;
c) D ist eine Kodotierung aus M2 und Mn, wobei M2 = ein oder mehrere Elemente aus der Gruppe Ce, Pr, Eu, Tb, Yb und Er;
d) dabei ist q = 0 bis 2,5 und p = 0,5 bis 4 gewählt.

2. Leuchtstoff nach Anspruch 1, **dadurch gekennzeichnet, dass** M1 ausgewählt ist aus Ca, Mg oder deren Mischung.

3. Leuchtstoff nach Anspruch 1, **dadurch gekennzeichnet, dass** M2 ausgewählt ist aus M2 = Eu, Yb allein oder in Mischung.

4. Leuchtstoff nach Anspruch 1, **dadurch gekennzeichnet, dass** der Anteil des Mn zwischen 1 und 50% von M2 ist.

5. Leuchtstoff nach Anspruch 1, **dadurch gekennzeichnet, dass** der Anteil von Mn zwischen 0,05 und 0,3 Mol.-% von M1 beträgt.

6. Beleuchtungseinheit mit mindestens einer Lichtquelle, insbesondere einer LED, wobei die Lichtquelle primäre Strahlung im Bereich 300 bis 485 nm emittiert, wobei diese Strahlung teilweise oder vollständig in längerwellige Strahlung konvertiert wird durch Leuchtstoffe, die der primären Strahlung der Lichtquelle ausgesetzt sind, **dadurch gekennzeichnet, dass** die Konversion zumindest unter Zuhilfenahme eines Leuchtstoffs, der gelb mit einer Wellenlänge der Peakemission bei 570 bis 580 nm emittiert und der aus der Klasse der alpha-Sialon stammt gemäß einem der vorhergehenden Ansprüche.

7. Beleuchtungseinheit nach Anspruch 6, **dadurch gekennzeichnet, dass** das A1 teilweise (bis zu 20 Mol.-%) durch Ga ersetzt ist.

8. Beleuchtungseinheit nach Anspruch 6, **dadurch gekennzeichnet, dass** q ≤ 1 und/oder p = 2 bis 3 gewählt ist.

9. Beleuchtungseinheit nach Anspruch 6, **dadurch gekennzeichnet, dass** der mittlere Korndurchmesser des Leuchtstoffpulvers zwischen 0,5 und 5 µm gewählt ist.

10. Beleuchtungseinheit nach Anspruch 6, **dadurch gekennzeichnet, dass** zur Erzeugung von weißem Licht die primär emittierte Strahlung im Wellenlängenbereich 330 bis 370 nm liegt, wobei die primär emittierte Strahlung zumindest zwei Leuchtstoffen mit Emissionsmaximum im Blauen (430 bis 470 nm) und Gelb-Orangen (insbesondere 545 bis 590 nm) zur Konversion ausgesetzt ist.

11. Beleuchtungseinheit nach Anspruch 6, **dadurch gekennzeichnet, dass** die primäre Strahlung zumindest noch einem weiteren Leuchtstoff, der entweder im Grünen (490 bis 525 nm) oder im Roten (625 bis 700 nm) emittiert, zur Konversion ausgesetzt ist.

12. Beleuchtungseinheit nach Anspruch 6, **dadurch gekennzeichnet, dass** der weitere Leuchtstoff ein Chlorosilikat oder ein Y- oder Tb-basierter Granat ist.

13. Beleuchtungseinheit nach Anspruch 6, **dadurch gekennzeichnet, dass** zur Erzeugung von weißem Licht die primär emittierte Strahlung im blauen Wellenlängenbereich von 430 bis 470 nm liegt, wobei die primär emittierte blaue Strahlung zwei Leuchtstoffen mit Emissionsmaximum im Gelben (570 nm bis 580 nm) und im Grünen (490 bis 525 nm) entsprechend einem der vorherigen Ansprüche ausgesetzt wird.

14. Beleuchtungseinheit nach Anspruch 6, **dadurch gekennzeichnet, dass** zur Erzeugung von farbigem Licht die primär emittierte Strahlung im blauen Wellenlängenbereich von 430 bis 485 nm liegt, wobei die primär emittierte blaue Strahlung einem einzigen Leuchtstoff mit Emissionsmaximum im Gelben (570 nm bis 580 nm) entsprechend einem der vorherigen Ansprüche ausgesetzt wird.

15. Beleuchtungseinheit nach Anspruch 14, **dadurch gekennzeichnet, dass** der Mischungsanteil des Gelb- - Leuchtstoffs etwa 0,5 bis 15 % beträgt.

16. Beleuchtungseinheit nach Anspruch 6, **dadurch gekennzeichnet, dass** als primäre Strahlungsquelle eine kurzwellig emittierende Leuchtdiode, insbesondere auf Basis von Ga(In)N, verwendet wird.

17. Beleuchtungseinheit nach Anspruch 6, **dadurch gekennzeichnet, dass** die Beleuchtungseinheit eine Lumineszenzkonversions-LED ist, bei der die Leuchtstoffe direkt oder mittelbar in Kontakt mit dem Chip stehen.

18. Beleuchtungseinheit nach Anspruch 6, **dadurch gekennzeichnet, dass** die Beleuchtungseinheit ein Feld (Array) von LEDs ist.

19. Beleuchtungseinheit nach Anspruch 18, **dadurch gekennzeichnet, dass** zumindest einer der Leuchtstoffe auf einer vor dem LED-Feld angebrachten optischen Vorrichtung angebracht ist.

## Claims

1. A phosphor of the alpha-sialon type, **characterised by** the following features:
a) The general empirical formula is M1_{p/2}Si₁₂₋ₚ₋₁Al_{p+q}O_{q}N_{16-q}:D;
b) Where M1 is one or more elements from the group Li, Mg, Ca, Y and the lanthanoids with the exception of Ce and La;
c) D is a co-doping consisting of M2 and Mn, where M2=one or more elements from the group Ce, Pr, Eu, Tb, Yb and Er;
d) In this situation q=0 to 2.5 and p=0.5 to 4 is chosen.

2. Phosphor according to claim 1, **characterised in that** M1 is selected from Ca, Mg or a mixture thereof.

3. Phosphor according to claim 1, **characterised in that** M2 is selected from M2=Eu, Yb alone or in a mixture.

4. Phosphor according to claim 1, **characterised in that** the proportion of Mn is between 1 and 50% of M2.

5. Phosphor according to claim 1, **characterised in that** the proportion of Mn is between 0.05 and 0.3 mol % of M1.

6. Illumination unit with at least one light source, in particular an LED, whereby the light source emits primary radiation in the range from 300 nm to 485 nm, whereby this radiation is partially or completely converted into radiation of longer wavelength by phosphors which are exposed to the primary radiation from the light source, **characterised in that** the conversion is carried out at least with the aid of a phosphor which emits yellow with a wavelength of the peak emission at 570 nm to 580 nm and which originates from the class of the alpha sialons according to one of the preceding claims.

7. Illumination unit according to claim 6, **characterised in that** the Al is replaced partially (up to 20 mol. %) by Ga.

8. Illumination unit according to claim 6, **characterised in that** q ≤ 1 and/or p=2 to 3 is chosen.

9. Illumination unit according to claim 6, **characterised in that** the mean particle diameter of the phosphor powder is chosen between 0.5 and 5 µm.

10. Illumination unit according to claim 6, **characterised in that**, for the generation of white light the primarily emitted radiation lies in the wavelength range 330 nm to 370 nm, whereby the primary radiation emitted is exposed to at least two phosphors having an emission maximum in the blue (430 to 470 nm) and in the yellow-orange (especially 545 to 590 nm) for the conversion.

11. Illumination unit according to claim 6, **characterised in that** the primary radiation is exposed to at least one further phosphor which emits either in the green (490 to 525 nm) or in the red (625 to 700 nm) for the conversion.

12. Illumination unit according to claim 6, **characterised in that** the further phosphor is a chlorosilicate or a Y- or Tb-based garnet.

13. Illumination unit according to claim 6, **characterised in that** for the generation of white light the primarily emitted radiation lies in the blue wavelength range from 430 nm to 470 nm, whereby the primarily emitted blue radiation is exposed to two phosphors having an emission maximum in the yellow (570 nm to 580 nm) and in the green (490 to 525 nm) in accordance with one of the preceding claims.

14. Illumination unit according to claim 6, **characterised in that** for the generation of coloured light the primarily emitted radiation lies in the blue wavelength range from 430 nm to 485 nm, whereby the primarily emitted blue radiation is exposed to a single phosphor having an emission maximum in the yellow (570 nm to 580 nm) in accordance with one of the preceding claims.

15. Illumination unit according to claim 14, **characterised in that** the proportion of the yellow phosphor in the mixture is approximately 0.5 to 15%.

16. Illumination unit according to claim 6, **characterised in that** a light-emitting diode emitting in a short wavelength range, especially based on Ga(In)N, is employed as the primary radiation source.

17. Illumination unit according to claim 6, **characterised in that** the illumination unit is a luminescence conversion LED, **characterised in that** the phosphors are directly or indirectly in contact with the chip.

18. Illumination unit according to claim 6, **characterised in that** the illumination unit is an array of LEDs.

19. Illumination unit according to claim 18, **characterised in that** at least one of the phosphors is fitted on an optical device fitted in front of the LED array.

## Revendications

1. Substance luminescente de type alpha-sialon **caractérisée par** les particularités suivantes :
a) la formule brute est M1_{p/2}Si_{12-p-q}Al_{p+q}O_{q}N_{16-q}:D;
b) dans laquelle M1 représente un ou plusieurs éléments du groupe comprenant Li, Mg, Ca, Y et les lanthanides à l'exception de Ce et La ;
c) D représente un codopant constitué par M2 et par Mn, M2 représentant un ou plusieurs éléments du groupe comprenant Ce, Pr, Eu, Tb, Yb et Er ;
d) q s'élevant de 0 à 2,5 et p s'élevant de 0,5 à 4.

2. Substance luminescente selon la revendication 1, **caractérisée en ce que** M1 est choisi parmi Ca, Mg ou leur mélange.

3. Substance luminescente selon la revendication 1, **caractérisée en ce que** M2 est choisi parmi M2 = Eu, Yb, seuls ou en mélange.

4. Substance luminescente selon la revendication 1, **caractérisée en ce que** la fraction du Mn représente entre 1 et 50 % de M2.

5. Substance luminescente selon la revendication 1, **caractérisée en ce que** la fraction de Mn représente entre 0,05 et 0,3 mole % de M1.

6. Unité d'éclairage comprenant au moins une source lumineuse, en particulier une LED, la source lumineuse émettant un rayonnement primaire dans la plage de 300 à 485 nm, ce rayonnement étant converti en partie ou complètement en un rayonnement de longueur d'onde supérieure via des substances luminescentes qui sont exposés au rayonnement primaire de la source lumineuse, **caractérisée en ce que** la conversion a lieu au moins à l'aide d'une substance luminescente qui émet dans le jaune avec une longueur d'onde dont le pic d'émission s'élève de 570 à 580 nm et qui fait partie de la classe des alpha-sialon conformément à l'une quelconque des revendications précédentes.

7. Unité d'éclairage selon la revendication 6, **caractérisée en ce que** l'Al est remplacé en partie (jusqu'à concurrence de 20 mol %) par le Ga.

8. Unité d'éclairage selon la revendication 6, **caractérisée en ce que** q ≤ 1 et/ou p s'élevant de 2 à 3.

9. Unité d'éclairage selon la revendication 6, **caractérisée en ce que** le diamètre de grain moyen de la poudre de substance luminescente est choisi entre 0,5 et 5 µm.

10. Unité d'éclairage selon la revendication 6, **caractérisée en ce que**, pour obtenir de la lumière blanche, le rayonnement correspondant à l'émission primaire se situe dans la plage de longueurs d'ondes de 330 à 370 nm, le rayonnement correspondant à l'émission primaire étant exposé à des fins de conversion à au moins deux substances luminescentes dont le maximum d'émission se situe dans le bleu (de 430 à 470 nm) et dans le jaune-orange (en particulier de 545 à 590 nm).

11. Unité d'éclairage selon la revendication 6, **caractérisée en ce que** le rayonnement primaire est exposé, à des fins de conversion, à au moins à une substance luminescente supplémentaire qui émet soit dans le vert (de 490 à 525 nm), soit dans le rouge (de 625 à 700 nm).

12. Unité d'éclairage selon la revendication 6, **caractérisée en ce que** la substance luminescente supplémentaire représente un chlorosilicate ou un grenat à base de Y ou de Tb.

13. Unité d'éclairage selon la revendication 6, **caractérisée en ce que**, pour obtenir de la lumière blanche, le rayonnement correspondant à l'émission primaire se situe dans la région de longueur d'onde bleue de 430 à 470 nm, le rayonnement bleu correspondant à l'émission primaire étant exposé à deux substances luminescentes dont le maximum d'émission se situe dans le jaune (de 570 à 580 nm) et dans le vert (de 490 à 525 nm), de manière correspondante à l'une quelconque des revendications précédentes.

14. Unité d'éclairage selon la revendication 6, **caractérisée en ce que**, pour obtenir une lumière colorée, le rayonnement correspondant à l'émission primaire se situe dans la région de longueur d'onde bleue de 430 à 485 nm, le rayonnement bleu correspondant à l'émission primaire étant exposé à une substance luminescente unique dont le maximum d'émission se situe dans le jaune (de 570 à 580 nm), de manière correspondante à l'une quelconque des revendications précédentes.

15. Unité d'éclairage selon la revendication 14, **caractérisée en ce que** la fraction de mélange de la substance luminescente jaune représente d'environ 0,5 à 15 %.

16. Unité d'éclairage selon la revendication 6, **caractérisée en ce qu'**on utilise, à titre de source de rayonnement primaire, une diode électroluminescente émettant sur les ondes courtes, en particulier à base de Ga(In)N.

17. Unité d'éclairage selon la revendication 6, **caractérisée en ce que** l'unité d'éclairage est une LED à conversion de luminescence, dans laquelle les substances luminescentes sont mises en contact direct ou indirect avec la puce.

18. Unité d'éclairage selon la revendication 6, **caractérisée en ce que** l'unité d'éclairage représente une matrice (array) de LED.

19. Unité d'éclairage selon la revendication 18, **caractérisée en ce qu'**au moins une des substances luminescentes est appliquée sur un dispositif optique monté devant la matrice de LED.
